Europäisches Patentamt

European Patent Office

Office européen des brevets

(19)

(11) **EP 1 130 357 A2**

(12) **EUROPÄISCHE PATENTANMELDUNG**

(43) Veröffentlichungstag:
 **05.09.2001 Patentblatt 2001/36**

(51) Int Cl.⁷: **G01C 21/26**

(21) Anmeldenummer: **01102291.0**

(22) Anmeldetag: **01.02.2001**

(84) Benannte Vertragsstaaten:
 **AT BE CH CY DE DK ES FI FR GB GR IE IT LI LU
 MC NL PT SE TR**
 Benannte Erstreckungsstaaten:
 **AL LT LV MK RO SI**

(30) Priorität: **03.03.2000 DE 10010607**

(71) Anmelder: **Mannesmann VDO Aktiengesellschaft
 60388 Frankfurt am Main (DE)**

(72) Erfinder:
 • **Tiede, Lutz
  93138 Lappersdorf (DE)**
 • **Leimbach, Jürgen
  93055 Regensburg (DE)**

(74) Vertreter: **Richter, Jürgen et al
 Kruppstrasse 105
 60388 Frankfurt (DE)**

(54) **Verfahren zum Erkennen eines stationären Zustands eines Fahrzeugs**

(57) Es wird ein Verfahren zur Unterscheidung zwischen einem Bewegungszustand und einem Ruhezustand eines Kraftfahrzeuges vorgeschlagen, bei dem das Ausgangssignal eines im Fahrzeug angeordneten Sensors ausgewertet wird. Erfindungsgemäß ist vorgesehen, daß das Rauschen des Sensorssignals zur Unterscheidung zwischen dem Bewegungszustand und dem Ruhezustand ausgewertet wird. Das Verfahren kann insbesondere bei Navigationssystemen eingesetzt werden, bei denen ein Abgleich der verschiedenen Sensoren im Ruhezustand des Fahrzeuges erfolgt.

Fig. 2

EP 1 130 357 A2

**Beschreibung**

Die Erfindung betrifft ein Verfahren zur Unterscheidung zwischen einem Bewegungszustand und einem Ruhezustand eines Kraftfahrzeugs durch Auswertung des Ausgangssignals eines im Fahrzeug angeordneten Sensors.

Insbesondere im Zusammenhang mit Navigationssystemen von Kraftfahrzeugen werden mehrere Sensoren zur Bestimmung der Ortsposition eines Fahrzeuges eingesetzt. Die genaue Position des Fahrzeuges wird zumeist aus einer Kombination einer Satellitenortung und einer Koppelortung ermittelt. Für die Koppelortung werden ein Richtungssensor, der zumeist als Drehratensensor ausgebildet ist, und eine Wegstreckenmeßeinrichtung eingesetzt. Bei der Wegstreckenmeßeinrichtung kann es sich bspw. um den im Fahrzeug ohnehin vorhandenen Tachometer handeln. Aufgrund der höheren Genauigkeit werden häufig jedoch auch die Meßsignale eines Antiblockiersystems für die Wegstreckenmeßung herangezogen. Gerade bei Letzterem werden jedoch Signale unterhalb einer bestimmten Grenzgeschwindigkeit von typischerweise etwa 3km/h unterdrückt. Hierdurch kann der Stillstand des Fahrzeuges anhand der Signale der Wegmeßeinrichtung nicht sicher erkannt werden. Die Erkennung des Fahrzeugstillstandes ist jedoch bei Navigationssystemen von besonderer Bedeutung, da die unterschiedlichen Ortungssignale in diesem Zustand abgeglichen werden. Zudem führen Störsignale während des Stillstands des Fahrzeuges, wie bspw. durch das Zuschlagen der Fahrzeugtür, zu einer fehlerhaften Kalibrierung. Es ist daher wünschenswert einen Abgleich der Sensoren nur dann durchzuführen, wenn sich das Kraftfahrzeug in einem Ruhezustand befindet, d. h. das Fahrzeug sich sowohl im Stillstand befindet und vorzugsweise auch keine sonstigen Erschütterungen auftreten.

Aufgabe der Erfindung ist es daher, ein Verfahren anzugeben, mit dem eine sichere Unterscheidung zwischen einem Bewegungszustand und einem Ruhezustand eines Kraftfahrzeuges möglich ist, wobei diese Unterscheidung insbesondere auch bei fehlendem Signal einer Wegstreckenmeßeinrichtung möglich ist.

Die Aufgabe wird bei einem gattungsgemäßen Verfahren dadurch gelöst, daß das Rauschen des Sensorsignals zur Unterscheidung zwischen dem Bewegungszustand und dem Ruhezustand ausgewertet wird. Es wurde herausgefunden, daß das Rauschen eines Sensors im Kraftfahrzeug deutlich davon abhängt, ob sich das Kraftfahrzeug in einem Bewegungszustand oder einem Ruhezustand befindet. Ausgehend von dieser Erkenntnis wird daher das Sensorrauschen vorzugsweise statistisch ausgewertet. Hierdurch wird eine sichere Unterscheidung zwischen einem Bewegungszustand und einem Ruhezustand ermöglicht. Der Ruhezustand schließt dabei insbesondere nicht alleine den Stillstand des Fahrzeuges ein, sondern auch äußere Erschütterungen des Fahrzeuges, wie sie bspw. durch das Zuschlagen einer Fahrzeugtür entstehen, können sicher anhand des statisch ausgewerteten Rauschens detektiert werden. Ein Komparator gibt abhängig von dem statistisch ausgewerteten Sensorrauschen ein Ja/Nein-Signal hinsichtlich des Bewegungszustandes des Kraftfahrzeuges aus.

Die statistische Auswertung des Sensorrauschens erfolgt insbesondere derart, daß aus den Signalen $x_i$ des Sensors zunächst der Mittelwert berechnet wird gemäß

$$m_x^{(1)} = \bar{x} = \frac{1}{N} \sum_{i=1}^{N} x_i$$

und anschließend der Mittelwert quadriert wird. Zudem wird aus den Sensorsignalen der quadratische Mittelwert berechnet gemäß

$$m_x^{(2)} = E(x^2) = \frac{1}{N} \sum_{i=1}^{N} x_i^2$$

Aus dem quadrierten Mittelwert und dem quadratischen Mittelwert wird schließlich die Varianz berechnet gemäß $\sigma^2_x = m^{(2)}_x - (m^{(1)}_x)^2$. Die so gebildete Varianz wird einem Komparator zugeleitet, der durch Vergleich mit einem Vorgabewert eine Ja/Nein-Entscheidung hinsichtlich des Bewegungszustandes trifft.

Bei dem Sensorsignal kann es sich insbesondere um das Signal eines Drehratensensors handeln, wie er bei Navigationssystemen eingesetzt wird. Die Ruhezustandserkennung des Kraftfahrzeuges erfolgt in diesem Fall völlig ohne Beachtung der Signale einer Wegstreckenmeßeinrichtung. Insbesondere kann das Verfahren deshalb auch dann eingesetzt werden, wenn in dem Navigationssystem anstelle einer Wegstreckenmeßeinrichtung die Signale eines Beschleunigungssensors für die Wegstreckenbestimmung ausgewertet werden.

Das Verfahren wird vorzugsweise in einem Navigationssystem eingesetzt, das mehrere Sensoren zur Positionsbestimmung aufweist. Bei diesen Sensoren handelt es sich insbesondere um einen Richtungssensor und einen Wegstrekken- und/oder Beschleunigungssensor. Durch den Abgleich dieser Sensoren im Ruhezustand des Fahrzeuges unter Beachtung der Positionssignale eines Satellitennavigationssystems kann eine deutlich verbesserte Genauigkeit erreicht werden. Der Abgleich der Sensoren des Navigationssystems erfolgt in an sich bekannter Weise. Um eine hohe Genauigkeit der Positionsbestimmung des Fahrzeuges zu erreichen, erfolgt neben einer Koppelnavigation und einer Satellitennavigation zusätzlich ein sogenanntes mapmatching, bei dem zur Bestimmung der Fahrzeugposition ein Vergleich der durch Koppel- und/oder Satelliten-

navigation ermittelten Fahrzeugposition mit Straßen-kartendaten durchgeführt wird.

Die Anwendung des Verfahrens ist jedoch nicht auf Navigationssysteme beschränkt. Durch die sichere Unterscheidung zwischen einem Bewegungszustand und einem Ruhezustand des Fahrzeuges kann das Verfahren auch zur Detektion von Fahrzeugerschütterungen bei einem außer Betrieb befindlichen Fahrzeug genutzt werden. Insbesondere kann das Verfahren deshalb in einem Alarmsystem eingesetzt werden, das bei abgestelltem Fahrzeug Fahrzeugerschütterungen detektiert und ggf. Alarm auslöst. Die Schwelle der Alarmauslösung kann durch entsprechende Einstellung des Komparators eingestellt werden, so daß geringfügige Fahrzeugerschütterungen, wie sie bspw. durch vorbeifahrende Lastkraftwagen auftreten, nicht zu einer Alarmauslösung führen.

Ein erfindungsgemäßes Navigationssystem für Kraftfahrzeuge mit Sensoren zur Bestimmung einer Fahrzeugposition ist dadurch gekennzeichnet, daß das Navigationssystem Mittel zur Auswertung des Rauschens eines Sensorssignals und zur Durchführung einer Stillstandserkennung anhand des ausgewerteten Sensorrauschsignals enthält. Insbesondere sind in dem Navigationssystem weiterhin Mittel zum Abgleich der Sensoren vorhanden. Die entsprechenden Mittel können sowohl als Software oder zumindest teilweise auch als Hardware ausgeführt sein.

Die Erfindung wird nachfolgend anhand eines Ausführungsbeispiels und der Zeichnung näher erläutert. Es zeigen:

Figur 1     die Komponenten eines Navigationssystems

Figur 2     die wesentlichen Module eines Ortungssystems

Figur 3     die Module einer Ruhezustandserkennung.

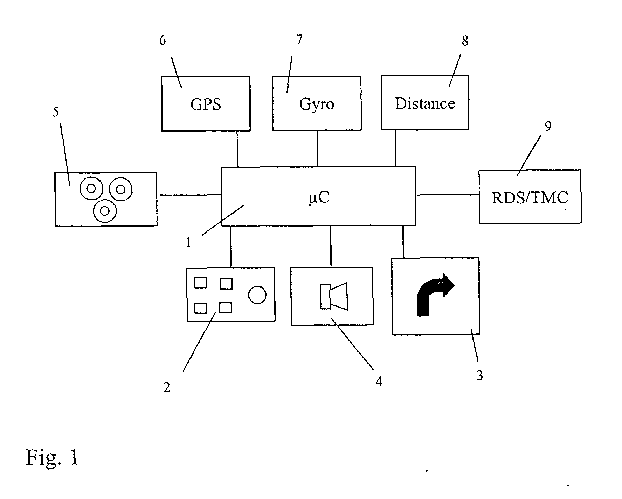

Figur 1 zeigt die wesentlichen Komponenten eines Kraftfahrzeugnavigationssystems. Zentraler Bestandteil ist das Steuergerät 1, das einen Mikroprozessor mit den zugehörigen Speicherelementen enthält. Mit der Steuereinheit 1 ist eine Eingabeeinheit 2 verbunden, über die bspw. ein Zielort eingegeben oder aus einer Liste ausgewählt werden kann. Weiterhin sind mit der Steuereinheit 1 eine optische Ausgabeeinheit 3 und eine akustische Ausgabeeinheit 4 verbunden, über die Zielführungshinweise ausgegeben werden. Die für eine Routenberechnung erforderlichen digitalen Straßenkartendaten sind auf einem Speichermedium hoher Speicherkapazität wie bspw. einer CD-ROM oder einer DVD abgespeichert und werden über das Lesegerät 5, das ebenfalls mit dem Steuergerät 1 verbunden ist, ausgelesen. Zur Positionsbestimmung weist das Navigationssystem eine Empfangs- und Auswerteeinrichtung 6 für Satellitensignale auf, wodurch eine Satellitennavigation durchführbar ist. Ferner weist das Navigationssystem einen Richtungssensor 7, der als Drehratensensor ausgebildet ist, sowie eine Wegstreckenmeßeinrichtung 8 auf. Mit den Signalen des Richtungssensors 7 und der Wegstreckenmeßeinrichtung 8 wird mit Hilfe eines geeigneten Programms in der Steuereinrichtung 1 eine Koppelnavigation durchgeführt. Weiterhin ist die Steuereinrichtung 1 mit einem Rundfunkempfänger 9 verbunden, so daß aktuelle Verkehrsmeldungen bei der Routenberechnung berücksichtigt werden können. Die Sensoren für die Richtungserkennung und die Wegstreckenmessung werden im Stillstand des Fahrzeuges mit den Positionsdaten der Satellitennavigation in an sich bekannter Weise abgeglichen. Hierdurch wird eine größere Übereinstimmung der durch Satellitennavigation und Koppelortung detektierten Fahrzeugposition erreicht.

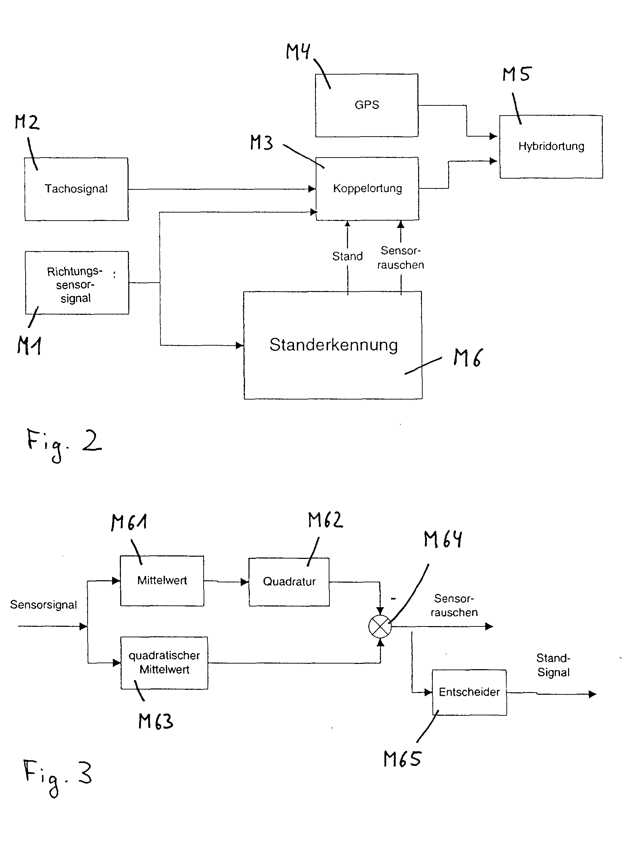

In Figur 2 sind die für die Ortung wesentlichen Module und ihr Zusammenspiel näher dargestellt. Im Modul M1 wird das Signal eines Richtungssensors zur Verfügung gestellt, während das Modul M2 ein Tachosignal zur Verfügung stellt. Mit dem Tachosignal und dem Richtungssensorsignal wird im Modul M3 eine Koppelortung durchgeführt. Weiterhin wird in dem GPS-Modul M4 eine Satellitenortung durchgeführt. Die Ergebnisse der Koppelortung im Modul M3 und der Satellitenortung im GPS-Modul M4 werden schließlich im Modul M5 miteinander in an sich bekannter Weise verknüpft um die wahrscheinlichste Fahrzeugposition zu ermitteln. Die Module M3 und M5 sind vollständig als Software in der Steuereinheit des Navigationssystems realisiert, während das GPS-Modul M4 sowohl Soft- als auch Hardwarekomponenten aufweist. Weiterhin ist ein Modul M6 vorhanden, das zur Erkennung eines Ruhezustands des Fahrzeugs dient. Das Modul M6 erhält als Eingangssignal das Ausgangssignal des Richtungssensors. Ausgangssignale des Moduls M6 sind sowohl das Sensorrauschen des Richtungssensor als auch ein Signal hinsichtlich eines Ruhe-oder Bewegungszustandes des Fahrzeuges. Die beiden Ausgangssignale des Moduls M6 werden dem Modul M3 für die Koppelortung zugeführt und dienen dem Abgleich der Signale für die Koppelortung.

Die einzelnen Komponenten des Moduls M6 für die Erkennung des Ruhezustandes sind in Figur 3 näher dargestellt. Im Modul M61 wird zunächst der Mittelwert aus den einzelnen Sensorsignalen $x_i$ gebildet:

$$m_x^{(1)} = \overline{x} = \frac{1}{N}\sum_{i=1}^{N} x_i$$

Im Modul M62 wird der so gebildete Mittelwert anschließend quadriert. Parallel dazu wird im Modul M63 aus den Sensorsignalen ein quadratischer Mittelwert gebildet:

$$m_x^{(2)} = E(x^2) = \frac{1}{N} \sum_{i=1}^{N} x_i^2$$

Aus dem quadrierten Mittelwert, der das Ausgangssignal des Moduls M62 ist, und dem quadratischen Mittelwert, der das Ausgangssignal des Moduls M63 ist, wird im Modul M64 die Varianz berechnet:

$$\sigma_x^2 = m_x^{(2)} - \left(m_x^{(1)}\right)^2$$

Diese Varianz wird als Sensorrauschen direkt an das Modul M3 für die Koppelortung weitergeleitet. Parallel dazu wird die Varianz einem Modul M65 zugeleitet, in dem anhand der berechneten Varianz und einem Vorgabewert entschieden wird, ob sich das Fahrzeug im Ruhezustand oder in einem Bewegungszustand befindet. Ausgangssignal des Moduls 65, das als Komparator ausgebildet ist, ist somit ein Ja/Nein-Signal. Dieses Ja/Nein-Signal, das bspw. die Werte 0 oder 1 annehmen kann, wird ebenfalls dem Modul M3 für die Koppelortung zugeführt. Kann durch das Modul M65 in eindeutiger Weise anhand der Varianz des Sensorssignals festgestellt werden, daß sich das Fahrzeug im Ruhezustand befindet, so kann der erforderliche Abgleich der Sensorsignale in an sich bekannter Weise durchgeführt werden.

Die Erfindung wurde anhand eines speziellen Navigationssystems erläutert, sie ist jedoch weder auf dieses spezielle Navigationssystem noch auf die Anwendung in Navigationssystemen beschränkt.

**Patentansprüche**

1. Verfahren zur Unterscheidung zwischen einem Bewegungszustand und einem Ruhezustand eines Kraftfahrzeugs durch Auswertung des Ausgangssignals eines im Fahrzeug angeordneten Sensors, **dadurch gekennzeichnet**, daß das Rauschen des Sensorsignals zur Unterscheidung zwischen dem Bewegungszustand und dem Ruhezustand ausgewertet wird.

2. Verfahren nach Anspruch 1, **dadurch gekennzeichnet**, daß das Sensorrauschen statistisch ausgewertet wird.

3. Verfahren nach Anspruch 2, **dadurch gekennzeichnet**, daß zur statistischen Auswertung des Sensorrauschens der quadrierte Mittelwert und der quadratische Mittelwert des Sensorsignals berechnet und die Varianz gebildet wird.

4. Verfahren nach einem der vorhergehenden Ansprüche, **dadurch gekennzeichnet**, daß es sich um das Sensorsignal eines Drehratensensors handelt.

5. Verfahren nach einem der vorhergehenden Ansprüche, **dadurch gekennzeichnet**, daß das Verfahren in einem Navigationssystem eingesetzt wird, das mehrere Sensoren zur Positionsbestimmung aufweist.

6. Verfahren nach Anspruch 5, **dadurch gekennzeichnet**, daß die Sensoren in einem Ruhezustand des Fahrzeugs abgeglichen werden.

7. Verfahren nach Anspruch 5 oder 6, **dadurch gekennzeichnet**, daß zur Positionsbestimmung des Fahrzeugs eine Koppelnavigation durchgeführt wird.

8. Verfahren nach einem der vorhergehenden Ansprüche 5 bis 7, **dadurch gekennzeichnet**, daß zur Positionsbestimmung eine Satellitennavigation durchgeführt wird.

9. Verfahren nach einem der vorhergehenden Ansprüche 5 bis 9, **dadurch gekennzeichnet**, daß zur Bestimmung der Fahrzeugposition ein Vergleich der durch Koppel- und / oder Satellitennavigation ermittelten Fahrzeugposition mit Straßenkartendaten durchgeführt wird.

10. Verfahren nach einem der vorhergehenden Ansprüche, **dadurch gekennzeichnet**, daß die Unterscheidung zwischen einem Bewegungszustand und einem Ruhezustand des Fahrzeugs zur Detektion von Fahrzeugerschütterungen bei einem außer Betrieb befindlichen Fahrzeug genutzt wird.

11. Verfahren nach Anspruch 10, **dadurch gekennzeichnet**, daß bei Detektion von Fahrzeugerschütterungen ein Alarm ausgelöst wird.

12. Navigationssystem für Kraftfahrzeuge mit Sensoren zur Bestimmung einer Fahrzeugposition, **dadurch gekennzeichnet**, daß das Navigationssystem Mittel zur Auswertung des Rauschens eines Sensorsignals und zur Durchführung einer Stillstandserkennung anhand des ausgewerteten Sensorrauschsignals enthält.

13. Navigationssystem nach Anspruch 12, **dadurch gekennzeichnet**, daß Mittel zum Abgleich der Sensoren vorhanden sind.

14. Navigationssystem nach Anspruch 12 oder 13, **dadurch gekennzeichnet**, daß es weiterhin eine zentrale Recheneinheit sowie eine Eingabeeinheit, eine Ausgabeeinheit und ein Lesegerät für digitale Straßenkartendaten enthält, die jeweils mit der zentralen Recheneinheit verbunden sind.

Fig. 1

M4

GPS

M5

M2

Hybridortung

M3

Tachosignal

Koppelortung

Richtungssensorsignal

M1

Stand

Sensorrauschen

Standerkennung

M6

**Fig. 2**

M61

M62

M64

Mittelwert

Quadratur

Sensorsignal

Sensorrauschen

quadratischer
Mittelwert

Stand-
Signal

M63

Entscheider

M65

**Fig. 3**